(19) Europäisches Patentamt
European Patent Office
Office européen des brevets

(11) **EP 4 151 768 A1**

(12) **EUROPEAN PATENT APPLICATION**
published in accordance with Art. 153(4) EPC

(43) Date of publication:
**22.03.2023 Bulletin 2023/12**

(21) Application number: **21829149.0**

(22) Date of filing: **22.06.2021**

(51) International Patent Classification (IPC):
**C23C 8/16** (2006.01)    **C23C 8/18** (2006.01)
**C10G 9/16** (2006.01)

(52) Cooperative Patent Classification (CPC):
**C23C 8/18; C10G 9/16; C10G 9/203; C10G 49/005;
C23C 8/16**

(86) International application number:
**PCT/CN2021/101435**

(87) International publication number:
**WO 2021/259233 (30.12.2021 Gazette 2021/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 23.06.2020   CN 202010582144
23.06.2020   CN 202010582183
23.06.2020   CN 202010582969
23.06.2020   CN 202010582151

(71) Applicants:
• **China Petroleum & Chemical Corporation
Beijing 100728 (CN)**
• **BEIJING RESEARCH INSTITUTE OF CHEMICAL
INDUSTRY,
CHINA PETROLEUM & CHEMICAL
CORPORATION
Chaoyang District
Beijing 100013 (CN)**

(72) Inventors:
• **WANG, Hongxia
Beijing 100013 (CN)**
• **WANG, Guoqing
Beijing 100013 (CN)**
• **WANG, Shenxiang
Beijing 100013 (CN)**
• **JIA, Jingsheng
Beijing 100013 (CN)**
• **ZHANG, Lijun
Beijing 100013 (CN)**

(74) Representative: **Hoffmann Eitle
Patent- und Rechtsanwälte PartmbB
Arabellastraße 30
81925 München (DE)**

(54) **ANTI-COKING EQUIPMENT, PREPARATION METHOD THEREFOR, AND USE THEREOF**

(57)    An anti-coking equipment, a preparation method therefor, and the use thereof. The preparation method comprises: bringing a low-oxygen partial pressure gas into contact with an equipment for reaction to obtain an anti-coking equipment containing an oxide film on the inner surface, wherein the dew point of the low-oxygen partial pressure gas is -40°C to 40°C.

A dense and stable oxide film is formed on the inner surface of the equipment prepared by the method, which can inhibit or slow down the catalytic coking phenomenon, reduce the degree of equipment carburization, and prolong the service life of the equipment.

EP 4 151 768 A1

**Description**

**CROSS REFERENCE TO RELATED APPLICARTIONS**

The application claims priority to the Chinese patent application numbers 202010582151.8, 202010582144.8, 202010582969.X and 202010582183.8, filed on June 23, 2020 respectively, which are entirely incorporated herein by reference.

**FIELD**

The present disclosure relates to the technical field of petroleum hydrocarbon pyrolysis and light hydrocarbon aromatization apparatus, and in particular to an anti-coking apparatus and a preparation method and a use thereof.

**BACKGROUND**

The cracking furnaces, transfer line exchangers (TLE for short) and aromatization reactors are commonly used apparatuses in the petrochemical industry, each is one of the important apparatuses used in hydrocarbon pyrolysis to produce ethylene or light hydrocarbon aromatization reaction. In order to ensure the high temperature strength of the aforementioned apparatuses in use, the materials used in the cracking furnaces, TLE and aromatization reactors mainly contain Fe, Cr, Ni and the like, while under the operating conditions of cracking furnaces, TLE and aromatization reactors, the Fe and/or Ni elements in the apparatuses may cause catalytic coking, carburization and other phenomenon on the inner wall of said apparatuses, which eventually results in serious carbon deposits on the inner walls of the apparatuses such as the cracking furnace tubes, tube pass furnace tubes of TLE and light hydrocarbon aromatization reactors, and the bed pressure drop increases, the apparatuses cannot be operated for a long period. In addition, the heavy hydrocarbon feedstock is accompanied by a large amount of free radical coking and polycondensation coking during the pyrolysis process.

Two main approaches are currently used to mitigate the coking and carburization process, namely adding the coking inhibitors to the pyrolysis feedstock and applying an anti-coking coating on the inner surface of said reactors. However, the method of adding the coking inhibitors to passivate an inner surface of said reactors or vaporize the coke, not only brings about pollution to the downstream product, but also requires the replenishment of specialized injection equipment, the method has poor effect for the low temperature coking. The primary direction of current research relates to preparation of an inert coating on an inner surface of said reactors, the inert coating can reduce the contact of hydrocarbons with active metallic species Fe and/or Ni on inner surface of the cracking furnace tubes, thereby alleviating the catalytic coking caused by the active metallic species Fe and/or Ni. On the other hand, the researchers also take measures such as adding components in the reactors, decreasing pressure in the reactors, reducing the residence time, lowering the pyrolysis temperature, optimizing the pyrolysis feedstock to reduce free radical coking and polycondensation coking during the pyrolysis process.

The methods of forming a protective layer on an inner surface of the reactor have two different approaches, one approach is to form a protective layer on an inner surface of the reactor by means of thermal spraying, thermal sputtering, high temperature sintering, chemical thermal treatment, chemical vapor deposition and the like, the disadvantage of such a method is that the protective layer is not firmly bonded to the reactor substrate, and the protective layer can be easily peeled off; another approach is to form the oxide protective layer on an inner surface of the reactor in-situ by treatment with a specific atmosphere under a certain temperature. The method has an advantage that the bonding force of the protective layer to the furnace tube substrate is strong and the protective layer cannot be easily peeled off.

Canadian NOVA Chemical Corporation discloses a series of patents for treating the inner surface of cracking furnace tube under a low oxygen partial pressure atmosphere to obtain a chromium manganese spinel oxide film, including US5630887A, US6436202B1, US6824883B1, US7156979B2, US7488392B2. The disclosed materials show that the technology exhibits a desirable effect of suppressing coking in a gas cracking furnace using ethane, propane and other light hydrocarbon as the raw materials, but the technology has poor anti-coking effect in the process of cracking the liquid feedstock. Since the coking of said gas cracking furnace is dominated by the catalytic coking, the oxide film will isolate Fe, Ni elements having catalytic coking activity in the furnace tube from the hydrocarbon coking source. In the case of a liquid cracking furnace fed with naphtha, diesel and the like, although the coking is also based on the catalytic coking, the polycondensation coking accounts for more than 50% of the total amount of coking, wherein the polycondensation coking can completely cover the oxide film. Therefore, the oxide film in the liquid cracking furnace tube is only effective for suppressing coking in the initial service stage of said furnace tube, because the oxide film at that time is not covered by the polycondensation coking; when the cracking furnace is operated to the middle and late periods, the oxide film cannot exert its effect.

CN105506713A discloses a method of forming a chromium-based coating on a component, the method comprises: dipping the component and a counter electrode into the electrolyte solution containing a trivalent chromium salt and nanometer ceramic particles, applying current to the component and counter electrode, and electroplating a layer of chromium based coating containing chromium and nanometer ceramic particles on the component. The method serves to form a chromium coating by electroplating to cover Fe, Ni elements.

CN103374705A discloses a magnetron sputtering device, the device comprises a reaction chamber, a chuck and target materials. The chuck is arranged at the bottom of the reaction chamber and used to hold workpieces to be processed. The target materials are arranged at the top of the reaction chamber. Edge magnets are arranged at the outside of the side wall of the reaction chamber. The edge magnets are arranged above the chuck, wherein auxiliary magnets are arranged at the edge of the chuck. The magnetic pole of the auxiliary magnets and the magnetic pole of the edge magnets are arranged in the same direction. The auxiliary magnets and the edge magnets form a magnetic loop. Via the magnetic loop, metal ions in plasma are moved toward the edge zone of the reaction chamber to increase the deposition amount of the target material particles on the edge zone of the workpieces to be processed. An inert coating is formed by the magnetron sputtering device.

However, the inert coatings formed by applying the foreign elements have a short life in practical industrial applications, and the coatings are largely peeled off after several cycles, thus these coatings are not widely used in the industry.

## SUMMARY

The present disclosure serves to overcome the existing problems in the prior art with respect to coking and carburization on an inner wall of the apparatus, and the difficulty in preparing an oxide film on the inner surface of said apparatus, and provides an anti-coking apparatus and a preparation method and a use thereof. By controlling the dew point of the low oxygen partial pressure gas and the relationship between the content of Fe and/or Ni metallic elements in the apparatus before the treatment and that after the treatment, the inner surface of the apparatus produced with the method may form a dense and stable oxide film, suppress or alleviate the catalytic coking process, reduce the carburization level of the apparatus, and prolong service life of the apparatus.

In order to fulfill the above purpose, a first aspect of the present disclosure provides a method for preparing an anti-coking apparatus, wherein the method comprises: subjecting a low oxygen partial pressure gas and the apparatus to a contact reaction to produce an anti-coking apparatus having an oxide film on the inner surface;

the dew point of the low oxygen partial pressure gas is from -40°C to 40°C.

In a second aspect, the present disclosure provides an anti-coking apparatus manufactured with the aforementioned preparation method.

In a third aspect, the present disclosure provides a use of the anti-coking apparatus in at least one of a cracking furnace, a TLE and an aromatization reactor.

Due to the aforementioned technical scheme, the anti-coking apparatus provided by the present disclosure, a preparation method and a use thereof produce the following favorable effects:

the present disclosure can ensure that the inner surface of the apparatus forms a dense and stable oxide film, suppresses or alleviates the catalytic coking process, reduces the carburization level of the apparatus, and prolongs service life of the apparatus, by controlling the dew point of the low oxygen partial pressure gas, and in particular, by controlling the relationship between the dew point of the low oxygen partial pressure gas and the content of the metallic element in an oxide film of the anti-coking apparatus.

Further, an inner surface of the anti-coking apparatus provided by the present disclosure contains an oxide film formed in an in-situ growth manner, the obtained oxide film has a strong bonding force with the apparatus substrate, such that the apparatus can be used for a long time while solving the problem of coking and carburization of the apparatus.

## DETAILED DESCRPITION

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point value of the various ranges, and the individual point values may be combined with one another to produce one or more new numerical ranges, which should be deemed have been specifically disclosed herein.

In a first aspect, the present disclosure provides a method for preparing an anti-coking apparatus, wherein the method comprises: subjecting a low oxygen partial pressure gas and the apparatus to a contact reaction to produce an anti-coking apparatus having an oxide film on the inner surface;

the dew point of the low oxygen partial pressure gas is from -40°C to 40°C.

In the present disclosure, the low oxygen partial pressure atmosphere refers to a reducing atmosphere in which the oxygen partial pressure is low, so that the oxidation process occurs very slowly, which is conducive to the formation of a dense oxide film on a surface of the material. The oxygen partial pressure means the pressure occupied by oxygen gas present in the atmosphere, and the oxygen in the atmosphere is mainly derived from oxygen generated by the decomposition of an oxygen-containing compound (e.g., $H_2O$) under the low oxygen partial pressure atmosphere.

Whatever in the engineering or the laboratory, it is difficult to obtain a low oxygen partial pressure atmosphere, and it is very difficult and unachievable to obtain a stable low oxygen partial pressure atmosphere by means of a flow control apparatus. The inventors of the present disclosure have surprisingly found, through the theoretical analysis and a large amount of experiments, that a dense and stable oxide film can be formed on an inner surface of the apparatus by controlling the dew point of the gas mixture, e.g., controlling the dew point of the low oxygen partial pressure gas to be within a range from -40°C to 40°C, thereby significantly suppress or alleviate the catalytic coking process, reduce the carburization level of the apparatus, and prolong service life of the apparatus.

In the present disclosure, the dew point refers to the temperature at which saturated water vapor in the air begins to condense and form dew; when the relative humidity is 100%, the temperature of the surrounding environment is exactly the dew point.

In the present disclosure, the method further comprises a step of measuring dew point of the low oxygen partial pressure gas.

In the present disclosure, the method further comprises measuring the dew point of the low oxygen partial pressure gas (using a commercially available dew point meter) prior to the contact reaction between the low oxygen partial pressure gas and the apparatus, such that the low oxygen partial pressure gas contacting the apparatus has the dew point defined by the present disclosure.

Further, the method may also include a step of monitoring the dew point of the low oxygen partial pressure gas in the contact reaction in real time by using a commercially available dew point meter during the contact reaction.

According to the present disclosure, the materials of the apparatus comprise iron element and/or nickel element.

According to the present disclosure, the oxide film comprises chromium manganese oxide and metallic elements, the metallic elements are iron element and/or nickel element.

In the present disclosure, the chromium manganese oxide has a composition of $Mn_xCr_{3-x}O_4$, wherein x has a numerical value of 0.5-2.

In the present disclosure, the content of metallic elements in said apparatus before the contact reaction and the content of metallic elements in the oxide film of the anti-coking apparatus after the contact reaction are measured by using an X-ray Energy Dispersive Spectrometer (EDS) method.

According to the present disclosure, the dew point of the low oxygen partial pressure gas and the content of metallic elements in the oxide film of the anti-coking apparatus satisfy the following relationship:

$$(W1-W2)/W1 = aT^2 + bT + c \text{ Formula I;}$$

in Formula I, $-0.0039 \leq a \leq -0.0001$, $0.001 \leq b \leq 0.0294$, $0.7269 \leq c \leq 0.8577$, $R^2 \geq 0.879$;

wherein W1 denotes the content of metallic elements of the apparatus before the contact reaction, wt%; W2 denotes the content of the metallic elements in the oxide film of the apparatus after the contact reaction, wt%; T is the dew point of the low oxygen partial pressure gas, °C.

The present disclosure can further ensure that a dense and stable oxide film is formed on an inner surface of the apparatus, suppress or alleviate the catalytic coking process, reduce the carburization level of the apparatus, and prolong service life of the apparatus, by controlling the relationship between the dew point of the low oxygen partial pressure gas and the content of the metallic elements in the oxide film of the anti-coking apparatus satisfying the aforementioned relationship.

In a specific embodiment of the present disclosure, in Formula I, $-0.0005 \leq a \leq -0.0001$, $0.001 \leq b \leq 0.0035$, $0.7355 \leq c \leq 0.8577$, $R^2 \geq 0.9463$.

In specific embodiment of the present disclosure, in Formula I, a= -0.0003, b=0.0035, c=0.7882, $R^2$=0.9463.

In specific embodiment of the present disclosure, in Formula I, a= -0.0001, b=0.002, c=0.8577, $R^2$=0.9785.

In specific embodiment of the present disclosure, in Formula I, a= -0.0003, b=0.001, c=0.7355, $R^2$=0.9867.

In specific embodiment of the present disclosure, in Formula I, a= -0.0005, b=0.0022, c=0.7678, $R^2$=0.98.

According to the present disclosure, in Formula I, $(W1-W2)/W1 \geq 0.281$, preferably, $(W1-W2)/W1 \geq 0.583$.

In a specific embodiment of the present disclosure, $(W1-W2)/W1 \geq 0.791$, preferably, $(W1-W2)/W1 \geq 0.861$.

In a specific embodiment of the present disclosure, $(W1-W2)/W1 \geq 0.587$, preferably, $(W1-W2)/W1 \geq 0.690$.

In a specific embodiment of the present disclosure, $(W1-W2)/W1 \geq 0.594$, preferably, $(W1-W2)/W1 \geq 0.797$.

According to the present disclosure, the apparatus is at least one selected from the group consisting of an alloy furnace tube, a TLE and a light hydrocarbon aromatization reactor.

In the present disclosure, the alloy furnace tube may be nickel chromium alloy tube commonly used in the prior art.

According to the present disclosure, when the apparatus is an alloy furnace tube, the total content of metallic elements in the alloy furnace tube before the contact reaction is 25-90wt%.

Specifically, the metallic elements include 20-50wt% of nickel element and 5-40wt% of iron element in the alloy furnace tube, and the alloy furnace tube further comprises 12-50wt% of chromium element, 0.2-3wt% of manganese element, 1-3wt% of silicon element, 0.1-0.75wt% of carbon element, 0-5wt% of microelements and trace elements, in addition to the iron and nickel elements.

Further, the total content of said metallic elements in the alloy furnace tube is 37-83wt%; specifically, the metallic elements comprise 25-48wt% of nickel element and 12-35wt% of iron element; the alloy furnace tube further comprises 20-38wt% of chromium element, 1-2.5wt% of manganese element, 1-2wt% of silicon element, 0.1-0.6wt% of carbon element, 0-3wt% of microelements and trace elements, in addition to the above-mentioned iron and nickel elements.

In the present disclosure, the microelements are one or more selected from the group consisting of niobium, titanium, tungsten, aluminum and rare earths; and the trace elements are selected from sulfur and/or phosphorus.

According to the present disclosure, when the apparatus is a TLE , the total content of metallic elements in the TLE tube pass furnace tubes before the contact reaction is within a range of 76.4-98 wt%.

In the present disclosure, the metallic element in the tube pass furnace tubes of TLE is iron element, and the alloy of tube pass furnace tubes of TLE further comprises 1.5-20wt% of chromium element, 0.2-0.6wt% of molybdenum element, 0.3-0.8wt% of manganese element, 0.4-2wt% of silicon element, 0.1-0.2wt% of carbon element, less than 5wt% of oxygen element and 0-1wt% of microelements, in addition to the iron element.

In the present disclosure, the microelements in the tube pass furnace tubes of TLE are at least one selected from the group consisting of Al, Nb, Ti, W and rare earth elements.

In the present disclosure, the TLE may be a conventional TLE of the prior art, it can be manufactured by using conventional manufacturing techniques of the prior art. In the present disclosure, the tube section of TLE is subjected to machining work, such that its inner surface is bright and has no oxide scale, and the oxygen content is less than 5wt%.

Further, when the apparatus is a TLE, the total content of the metallic element (iron element) in the tube pass furnace tubes of TLE before the contact reaction is within a range of 80-97wt%, the tube pass furnace tubes of TLE further comprise 2-15wt% of chromium element, 0.25-0.35wt% of molybdenum element, 0.55-0.65wt% of manganese element, 0.5-1.9wt% of silicon element, 0.14-0.17wt% of carbon element, less than 3wt% of oxygen element and 0.15-0.65wt% of microelements, in addition to the metallic element (iron element).

In the present disclosure, the alloy of tube pass furnace tubes of TLE may be a conventional alloy in the art, such as 15Mo3.

According to the present disclosure, the alloy material of the aromatization reactor is at least one selected from the group consisting of stainless steel 304, 316 and 321, more preferably, the alloy material of the aromatization reactor is stainless steel 304, and the content of metallic elements in the aromatization reactor before the contact reaction is 68-81wt%.

In the present disclosure, the aromatization reactor may be a conventional aromatization reactor of the prior art, or an aromatization reactor prepared by using the conventional manufacturing techniques of the prior art.

In a specific embodiment of the present disclosure, the dew point of the low oxygen partial pressure gas is within a range of -30°C to 30°C; in Formula I, $-0.0005 \leq a \leq -0.0003$, $0.001 \leq b \leq 0.0092$, $0.7355 \leq c \leq 0.8308$, $R^2 \geq 0.9539$.

In a specific embodiment of the present disclosure, the dew point of the low oxygen partial pressure gas is within a range of -20°C to 20°C; in Formula I, $-0.0006 \leq a \leq -0.0003$, $0.001 \leq b \leq 0.0092$, $0.7269 \leq c \leq 0.8308$, $R^2 \geq 0.879$.

In a specific embodiment of the present disclosure, the dew point of the low oxygen partial pressure gas is within a range of -15°C to 15°C; in Formula I, $-0.0006 \leq a \leq -0.0005$, $0.0021 \leq b \leq 0.0049$, $0.7419 \leq c \leq 0.8109$, $R^2 \geq 0.879$.

In a specific embodiment of the present disclosure, the dew point of the low oxygen partial pressure gas is within a range of -15°C to 10°C; in Formula I, $-0.0005 \leq a \leq -0.0003$, $0.0021 \leq b \leq 0.0053$, $0.7419 \leq c \leq 0.8138$, $R^2 \geq 0.8943$.

In a specific embodiment of the present disclosure, the dew point of the low oxygen partial pressure gas is within a range of -10°C to 10°C; in Formula I, $a = -0.0005$, $b = 0.0021$, $c = 0.7419$, $R^2 = 1$.

In a specific embodiment of the present disclosure, the dew point of the low oxygen partial pressure gas is within a range of -5°C to 5°C; in Formula I, $a = -0.0039$, $b = 0.0041$, $c = 0.8333$, $R^2 = 1$.

In a specific embodiment of the present disclosure, the dew point of the low oxygen partial pressure gas is within a range of 0°C to 20°C, in Formula I, $a = -0.0004$, $b = 0.0092$, $c = 0.8308$, $R^2 = 1$.

In a specific embodiment of the present disclosure, the dew point of the low oxygen partial pressure gas is within a range of 0°C to 10°C; in Formula I, $a = -0.0022$, $b = 0.0238$, $c = 0.7787$, $R^2 = 0.9887$.

In a specific embodiment of the present disclosure, the dew point of the low oxygen partial pressure gas is within a range of 2°C to 8°C; in Formula I, $a = -0.0028$, $b = 0.0294$, $c = 0.7678$, $R^2 = 0.9995$.

According to the present disclosure, the low oxygen partial pressure gas is a gas mixture consisting of $CO_2$ and/or $H_2O$ and at least one selected from the group consisting of CO, $CH_4$, $C_2H_6$, $C_3H_8$, $NH_3$, $H_2$, $N_2$, Ar, He, air and pyrolysis gas.

Preferably, the low oxygen partial pressure gas is at least one selected from the group consisting of a gas mixture of $CH_4$ and $H_2O$, a gas mixture of $CO_2$ and $CO$, a gas mixture of $H_2O$ and $CO$, and a gas mixture of $H_2O$ and $H_2$.

Preferably, the method further comprises a step of measuring dew point of the low oxygen partial pressure gas.

According to the present disclosure, the conditions of contacting reaction comprise: reaction temperature of 400-1,100°C, preferably 600-1,100°C; reaction time of 5-100h, preferably 5-72h.

In an embodiment of the present disclosure, the conditions of contacting reaction comprise: reaction temperature of 750-1,000°C and reaction time of 20-50 h.

In an embodiment of the present disclosure, the conditions of contacting reaction comprise: reaction temperature of 700-950°C and reaction time of 10-80 h.

In an embodiment of the present disclosure, the conditions of contacting reaction comprise: reaction temperature of 750-950°C and reaction time of 20-60 h.

In an embodiment of the present disclosure, the conditions of contacting reaction comprise: reaction temperature of 800-1,050°C and reaction time of 30-60 h.

In the present disclosure, the flow rate of the low oxygen partial pressure gas is 100-500mL/min, preferably 200-400 mL/min.

In the present disclosure, the contact reaction may be performed in an apparatus which is capable of maintaining a certain atmosphere and commonly used in the art, for example, the contact reaction may be performed in at least one selected from the group consisting of a tube furnace, a well furnace and an atmosphere box furnace.

According to the present disclosure, the apparatus is an alloy furnace tube used in the cracking furnace.

Further, the alloy furnace tube comprises an enhanced heat transfer member fixed in the furnace tube.

The inventors of the present disclosure have discovered through researches that by providing an enhanced heat transfer member inside the furnace tube, the enhanced heat transfer member changes the flow state of the low oxygen partial pressure gas during the contact reaction between the furnace tube and the low oxygen partial pressure gas, the trace amount of $O_2$ in the low oxygen partial pressure gas can be brought into sufficient contact with the tube wall, such that the tube wall is completely oxidized, and the content of metallic elements in the formed oxide film is further reduced.

In contrast, when a furnace tube without an enhanced heat transfer member is subjected to treatment with a low oxygen partial pressure gas, the gas contacts with the tube wall in a laminar state, $O_2$ in the middle of the gas flow is not substantially involved in oxidation reaction of the tube wall, the tube wall cannot be completely oxidized, thus the formed oxide film has a high content of metallic elements.

Moreover, due to the enhanced heat transfer member, after the enhanced heat transfer member changes the flow state of the pyrolysis gas near the tube wall from laminar flow to turbulent flow during the pyrolysis process, the condensation coking on the inner surface of the furnace tube is easily washed out by the flow of pyrolysis gas, the reason may be that the condensation coking is generally a relatively loose coke and has a relatively weak adhesion on the inner wall of the furnace tube. Therefore, the coke adhered on the inner wall of the furnace tube containing the enhanced heat transfer member is mainly composed of the catalytic coking, so that the oxide film formed by low oxygen partial pressure treatment can sufficiently exert its effect, thereby significantly prolonging the operating cycle of the cracking furnace.

In the present disclosure, the enhanced heat transfer member may be a conventional component in the prior art capable of changing a fluid flow state and enhancing a heat transfer coefficient, for example, the enhanced heat transfer member is preferably at least one selected from the group consisting of a swirling element radiation tube (SERT for short), an inner rib tube and an inner fin tube.

In the present disclosure, a cracking furnace alloy furnace tube provided with an enhanced heat transfer member is prepared with a conventional method in the art. For example, the cracking furnace alloy furnace tube is generally manufactured by means of centrifugal casting, while a furnace tube having an enhanced heat transfer member therein may be manufactured in various forms. For example, a furnace tube having a SERT or an inner fin tube therein is generally manufactured through block cast by means of a static casting, and a furnace tube having an inner rib therein is manufactured by welding the rib inside the furnace tube.

In addition, alloy furnace tubes used for the cracking furnace provided with an enhanced heat transfer member are also commercially available, such as the plum blossom tubes (tubes provided with inner fins therein) of the Kellogg corporation, the MERT tubes (tubes provided with inner ribs therein) of the Kubota corporation and the SERT tubes (tubes provided with twisted slices therein) of the China Petroleum & Chemical Corporation (Sinopec).

According to the present disclosure, the tubes with the enhanced heat transfer member have a length of 20-80cm, the number of said tubes is 1-200, and the tubes are distributed over different tube passes of the entire furnace tube.

In a second aspect, the present disclosure provides an anti-coking apparatus manufactured with the aforesaid preparation method.

In the present disclosure, the inner surface of the anti-coking apparatus contains an oxide film including chromium manganese oxide and metallic elements.

The inventors of the present disclosure have discovered through researches that the anti-coking apparatus of the present disclosure can alleviate or suppress the coking and carburization phenomena of the apparatus under high temperature, the reasons may be that after the apparatus is contacted with the low oxygen partial pressure gas by using the solution of the present disclosure, the Cr element and Mn element in the apparatus have higher activity of reacting with oxygen to form oxides than Fe element and/or Ni element, thus the chromium and manganese elements on the inner surface of the apparatus slowly oxidize at a low oxygen partial pressure condition, while the iron element and/or nickel element are not substantially oxidized; in addition, the oxygen partial pressure of the atmosphere is low, thus the oxidation process is very slow, such that a dense oxide film having a strong binding force with the apparatus substrate is formed on the inner surface of the apparatus in-situ, the oxide film will cover the Fe and Ni elements which have a catalytic action on the coking of said apparatus, so that the content of iron element and/or nickel element on the inner wall of said apparatus is reduced, the coking and carburization phenomena of the apparatus are alleviated or suppressed, the operational cycle of the apparatus is prolonged.

According to the present disclosure, the total content of Fe element and/or Ni element in the oxide film on the inner surface of the apparatus treated with the above method is low, such that the apparatus can suppress catalytic coking in the hydrocarbon cracking process or the aromatization process, extend the operational cycle of said apparatus, thereby satisfying the long-term service requirements of the apparatus.

In a third aspect, the present disclosure provides a use of the aforesaid anti-coking apparatus in at least one of a cracking furnace, a TLE and an aromatization reactor.

In the present disclosure, the feedstock for pyrolysis may be gaseous hydrocarbons or liquid hydrocarbons. Specifically, the gaseous hydrocarbons are at least one selected from the group consisting of ethane, propane, butane and liquefied petroleum gas; the liquid hydrocarbons are at least one selected from the group consisting of naphtha, gas condensate, hydrocracking tail oil and diesel.

In the present disclosure, the cracking reaction may be carried out according to a conventional cracking process of the prior art. For example, the cracking temperature is 770-880°C, the water-oil ratio is 0.3-0.8. Preferably, the cracking temperature of naphtha is 830-850°C, and the water-oil ratio is 0.5-0.55.

In the present disclosure, light hydrocarbon aromatization reaction may be performed according to conventional aromatization reaction conditions of the prior art. Specifically, the reaction temperature is 280-530°C, and the reaction pressure is 0.3MPa.

The present disclosure will be described below with reference to examples. In the following examples,

the elemental composition of the apparatus was measured by using an X-ray Energy Dispersive Spectrometer (EDS) method;
the dew point of the low oxygen partial pressure gas was determined by using the detection method of a commercially available dew point meter;
the amount of coke on the apparatus was calculated after on-line measuring the CO and $CO_2$ concentration in the decoking gas by means of an infrared meter and measuring the volume of the decoking gas on-line by means of a wet gas flow meter;
the pyrolysis feedstock was naphtha, which exhibited the following physical properties: distillation range of 32.8-173.8°C and specific gravity $D_{20}$ of 0.7058g/mL.

In the following examples and Comparative Examples:
on a self-made laboratory device, the low oxygen partial pressure atmosphere treatment of small-scale experiment cracking furnace tube or simulated TLE furnace tube was carried out, as well as the coking evaluation tests of preparing ethylene by cracking naphtha with the feed rate of 200g/h.

The light hydrocarbon aromatization reaction was carried out in a small-scale experiment reactor treated with a low oxygen partial pressure atmosphere, the HZSM-5 catalyst was used, the feedstock was n-hexane, the aromatization reaction conditions comprised: reaction volumetric hourly space velocity of $1h^{-1}$, reaction temperature of 500°C, hydrogen oil volume ratio of 400:1, reaction pressure of 0.3MPa, reaction time of 20 h.

Example 1

The radiation section furnace tubes of the industrial cracking furnace made from the furnace tube material 35Cr45Ni were subjected to a gas atmosphere treatment with low oxygen partial pressure. The elemental composition (wt%) of the furnace tube alloy comprised: 32.55wt% of Cr, 42.60wt% of Ni, 21.12wt% of Fe, 0.98wt% of Mn, 1.41wt% of Si, 0.64wt% of Nb, 0.53wt% of C, and 0.17wt% of other elements. Twisted slices tubes produced integrally with the furnace tubes were axially arranged in the radiant section furnace tubes of the cracking furnace in the form of mutual spacing, the axial length of the twisted slices twisted 180° was a pitch, the distance between two adjacent twisted slices was 15 pitches, the twisted slices tubes had a length of 35cm, 100 twisted slices tubes were distributed over different tube passes of the entire furnace tubes. The low oxygen partial pressure gas in use was a gas mixture of CO and water vapor, wherein a dew point of the gas mixture was 5°C, the treatment temperature was 900°C, and the treatment time was 50 hours; an oxide film containing elements such as Cr, Mn, Ni, Fe, O and Si was formed on the inner wall surface of the radiation section furnace tubes. The chromium manganese oxide in the oxide film was $Mn_{1.5}Cr_{1.5}O_4$, and the total content of iron and nickel elements was 9.93wt% relative to the total weight of the oxide film.

The hydrocarbon steam cracking reaction was carried out in the above industrial cracking furnace after the treatment with the low oxygen partial pressure gas atmosphere. The cracking feedstock was naphtha having the physical properties consisting of distillation range of 32.8-173.8°C and specific gravity $D_{20}$ of 0.7058 g/mL. The cracking conditions were as follows: the coil outlet temperature was 830°C, and the water-to-oil ratio was 0.55. The cracking furnace had the run length of 230 days.

Example 2

The HP40(Cr25Ni35) small-scale experiment furnace tube containing 1 twisted slice tube was subjected to a low oxygen partial pressure pre-oxidation treatment; the elemental composition (wt%) of the furnace tube alloy comprised: 25.1wt% of Cr, 35.2wt% of Ni, 1.0wt% of Mn, 1.5wt% of Si, 0.4wt% of C, less than 0.03wt% of P, less than 0.03wt% of S, and the balance was Fe (wt%).

A gas mixture of CO and water vapor was used as the treatment gas of a low oxygen partial pressure gas atmosphere, wherein the dew point of the gas mixture was 5°C, the flow rate of the low oxygen partial pressure gas was 400ml/min, the treatment temperature was 950°C, and the treatment time was 30 h; an oxide film containing elements such as Cr, Mn, Ni, Fe, O and Si was formed on the inner wall surface of the furnace tube. The chromium manganese oxide in the oxide film was $Mn_{1.5}Cr_{1.5}O_4$, and the total content of iron and nickel elements was 11.27wt% relative to the total weight of the oxide film.

The hydrocarbon steam cracking reaction was carried out in the small-scale experiment furnace tube subjected to the above treatment with the low oxygen partial pressure atmosphere. The cracking feedstock was naphtha having the physical properties consisting of distillation range of 32.8-173.8°C and specific gravity $D_{20}$ of 0.7058 g/mL. The cracking conditions were as follows: the cracking temperature was 845°C, and the water-to-oil ratio was 0.5. The coke amount of the furnace tube in the present disclosure was reduced by 95.21% compared to the coke amount of HP40(Cr25Ni35) furnace tube in the prior art which did not contain an enhanced heat transfer member and was not subjected to the low oxygen partial pressure treatment.

Example 3

The same small-scale experiment furnace tube as that in Example 2 was subjected to a low oxygen partial pressure pre-oxidation treatment, except that the dew point of the gas mixture of CO and water vapor was 8°C, the other treatment conditions were the same as those in Example 2; an oxide film containing elements such as Cr, Mn, Ni, Fe, O and Si was formed on the inner wall surface of the furnace tube. The chromium manganese oxide in the oxide film was $Mn_{1.5}Cr_{1.5}O_4$, and the total content of iron and nickel elements was 12.88wt% relative to the total weight of the oxide film.

The hydrocarbon steam cracking reaction was carried out in the small-scale experiment furnace tube after the above treatment with the low oxygen partial pressure atmosphere, the cracking feedstock and the cracking conditions were the same as those in Example 2. The coke amount of the furnace tube in the present disclosure was reduced by 90.15% compared to the coke amount of HP40(Cr25Ni35) furnace tube in the prior art which did not contain an enhanced heat transfer member and was not subjected to the low oxygen partial pressure treatment.

Example 4

The same small-scale experiment furnace tube as that in Example 2 was subjected to a low oxygen partial pressure pre-oxidation treatment, except that the dew point of the gas mixture of CO and water vapor was 2°C, the other treatment conditions were the same as those in Example 2; an oxide film containing elements such as Cr, Mn, Ni, Fe, O and Si was formed on the inner wall surface of the furnace tube. The chromium manganese oxide in the oxide film was $Mn_{1.5}Cr_{1.5}O_4$, and the total content of iron and nickel elements was 13.29wt% relative to the total weight of the oxide film.

The hydrocarbon steam cracking reaction was carried out in the small-scale experiment furnace tube after the above treatment with the low oxygen partial pressure atmosphere, the cracking feedstock and the cracking conditions were the same as those in Example 2. The coke amount of the furnace tube in the present disclosure was reduced by 86.38% compared to the coke amount of HP40(Cr25Ni35) furnace tube in the prior art which did not contain an enhanced heat transfer member and was not subjected to the low oxygen partial pressure treatment.

Example 5

The same small-scale experiment furnace tube as that in Example 2 was subjected to a low oxygen partial pressure pre-oxidation treatment, except that the dew point of the gas mixture of CO and water vapor was 10°C, the other treatment conditions were the same as those in Example 2; an oxide film containing elements such as Cr, Mn, Ni, Fe, O and Si was formed on the inner wall surface of the furnace tube. The chromium manganese oxide in the oxide film was $Mn_{1.5}Cr_{1.5}O_4$, and the total content of iron and nickel elements was 14.80wt% relative to the total weight of the oxide film.

The hydrocarbon steam cracking reaction was carried out in the small-scale experiment furnace tube after the above treatment with the low oxygen partial pressure atmosphere, the cracking feedstock and the cracking conditions were the same as those in Example 2. The coke amount of the furnace tube in the present disclosure was reduced by 81.46% compared to the coke amount of HP40(Cr25Ni35) furnace tube in the prior art which did not contain an enhanced heat transfer member and was not subjected to the low oxygen partial pressure treatment.

Example 6

The same small-scale experiment furnace tube as that in Example 2 was subjected to a low oxygen partial pressure pre-oxidation treatment, except that the dew point of the gas mixture of CO and water vapor was 0°C, the other treatment conditions were the same as those in Example 2; an oxide film containing elements such as Cr, Mn, Ni, Fe, O and Si was formed on the inner wall surface of the furnace tube. The chromium manganese oxide in the oxide film was $Mn_{1.5}Cr_{1.5}O_4$, and the total content of iron and nickel elements was 15.89wt% relative to the total weight of the oxide film.

The hydrocarbon steam cracking reaction was carried out in the small-scale experiment furnace tube after the above treatment with the low oxygen partial pressure atmosphere, the cracking feedstock and the cracking conditions were the same as those in Example 2. The coke amount of the furnace tube in the present disclosure was reduced by 75.69% compared to the coke amount of HP40(Cr25Ni35) furnace tube in the prior art which did not contain an enhanced heat transfer member and was not subjected to the low oxygen partial pressure treatment.

Comparative Example 1

The radiation section furnace tubes of the industrial cracking furnace having the same furnace profiles as those in Example 1 were used, except that the furnace tubes were not subjected to a treatment with the low oxygen partial pressure atmosphere. The hydrocarbon steam cracking reaction was carried out in the industrial cracking furnace, the cracking feedstock and the cracking conditions were same as those in Example 1. The cracking furnace had an operational cycle of 100 days.

Comparative Example 2

The radiation section furnace tubes of the industrial cracking furnace having the same furnace profiles as those in Example 1 were used, except that the radiation section furnace tubes did not contain the twisted slices and were not subjected to a treatment with the low oxygen partial pressure gas atmosphere; the cracking furnace had an operational cycle of 55 days.

Example 7

The same small-scale experiment furnace tube as that in Example 2 was subjected to a low oxygen partial pressure pre-oxidation treatment, except that the dew point of the gas mixture of CO and water vapor was 20°C, the other treatment conditions were the same as those in Example 2; an oxide film containing elements such as Cr, Mn, Ni, Fe, O and Si was formed on the inner wall surface of the furnace tube. The chromium manganese oxide in the oxide film was $Mn_{1.5}Cr_{1.5}O_4$, and the total content of iron and nickel elements was 17.62wt% relative to the total weight of the oxide film.

The hydrocarbon steam cracking reaction was carried out in the small-scale experiment furnace tube after the above treatment with the low oxygen partial pressure atmosphere, the cracking feedstock and the cracking conditions were the same as those in Example 2. The coke amount of the furnace tube in the present disclosure was reduced by 33.90% compared to the coke amount of HP40(Cr25Ni35) furnace tube in the prior art which did not contain the twisted slice and was not subjected to the low oxygen partial pressure treatment.

Example 8

The same small-scale experiment furnace tube as that in Example 2 was subjected to a low oxygen partial pressure pre-oxidation treatment, except that the dew point of the gas mixture of CO and water vapor was -10°C, the other treatment conditions were the same as those in Example 2; an oxide film containing elements such as Cr, Mn, Ni, Fe, O and Si was formed on the inner wall surface of the furnace tube. The chromium manganese oxide in the oxide film was $Mn_{1.5}Cr_{1.5}O_4$, and the total content of iron and nickel elements was 19.01wt% relative to the total weight of the oxide film.

The hydrocarbon steam cracking reaction was carried out in the small-scale experiment furnace tube after the above treatment with the low oxygen partial pressure atmosphere, the cracking feedstock and the cracking conditions were the same as those in Example 2. The coke amount of the furnace tube in the present disclosure was reduced by 24.55% compared to the coke amount of HP40(Cr25Ni35) furnace tube in the prior art which did not contain the twisted slice and was not subjected to the low oxygen partial pressure treatment.

Example 9

The same small-scale experiment furnace tube as that in Example 2 was subjected to a low oxygen partial pressure pre-oxidation treatment, except that the dew point of the gas mixture of CO and water vapor was -30°C, the other treatment conditions were the same as those in Example 2; an oxide film containing elements such as Cr, Mn, Ni, Fe, O and Si was formed on the inner wall surface of the furnace tube. The chromium manganese oxide in the oxide film was $Mn_{1.5}Cr_{1.5}O_4$, and the total content of iron and nickel elements was 42.39wt% relative to the total weight of the oxide film.

The hydrocarbon steam cracking reaction was carried out in the small-scale experiment furnace tube after the above treatment with the low oxygen partial pressure atmosphere, the cracking feedstock and the cracking conditions were the same as those in Example 2. The coke amount of the furnace tube in the present disclosure was reduced by 17.15% compared to the coke amount of HP40(Cr25Ni35) furnace tube in the prior art which did not contain the twisted slice and was not subjected to the low oxygen partial pressure treatment.

Example 10

The same small-scale experiment furnace tube as-that in Example 2 was subjected to a low oxygen partial pressure pre-oxidation treatment, except that the dew point of the gas mixture of CO and water vapor was -40°C, the other treatment conditions were the same as those in Example 2; an oxide film containing elements such as Cr, Mn, Ni, Fe, O and Si was formed on the inner wall surface of the furnace tube. The chromium manganese oxide in the oxide film was $Mn_{1.5}Cr_{1.5}O_4$, and the total content of iron and nickel elements was 51.72wt% relative to the total weight of the oxide film.

The hydrocarbon steam cracking reaction was carried out in the small-scale experiment furnace tube after the above treatment with the low oxygen partial pressure atmosphere, the cracking feedstock and the cracking conditions were the same as those in Example 2. The coke amount of the furnace tube in the present disclosure was reduced by 13.09% compared to the coke amount of HP40(Cr25Ni35) furnace tube in the prior art which did not contain the twisted slice and was not subjected to the low oxygen partial pressure treatment.

Example 11

The same small-scale experiment furnace tube as that in Example 2 was subjected to a low oxygen partial pressure pre-oxidation treatment, except that the dew point of the gas mixture of CO and water vapor was -20°C, the other treatment conditions were the same as those in Example 2; an oxide film containing elements such as Cr, Mn, Ni, Fe, O and Si was formed on the inner wall surface of the furnace tube. The chromium manganese oxide in the oxide film was $Mn_{1.5}Cr_{1.5}O_4$, and the total content of iron and nickel elements was 34.96wt% relative to the total weight of the oxide film.

The hydrocarbon steam cracking reaction was carried out in the small-scale experiment furnace tube after the above treatment with the low oxygen partial pressure atmosphere, the cracking feedstock and the cracking conditions were the same as those in Example 2. The coke amount of the furnace tube in the present disclosure was reduced by 18.64% compared to the coke amount of HP40(Cr25Ni35) furnace tube in the prior art which did not contain the twisted slice and was not subjected to the low oxygen partial pressure treatment.

Example 12

The same small-scale experiment furnace tube as that in Example 2 was subjected to a low oxygen partial pressure pre-oxidation treatment, except that the dew point of the gas mixture of CO and water vapor was -15°C, the other treatment conditions were the same as those in Example 2; an oxide film containing elements such as Cr, Mn, Ni, Fe, O and Si was formed on the inner wall surface of the furnace tube. The chromium manganese oxide in the oxide film was $Mn_{1.5}Cr_{1.5}O_4$, and the total content of iron and nickel elements was 26.98wt% relative to the total weight of the oxide film.

The hydrocarbon steam cracking reaction was carried out in the small-scale experiment furnace tube after the above treatment with the low oxygen partial pressure atmosphere, the cracking feedstock and the cracking conditions were the same as those in Example 2. The coke amount of the furnace tube in the present disclosure was reduced by 20.73% compared to the coke amount of HP40(Cr25Ni35) furnace tube in the prior art which did not contain the twisted slice and was not subjected to the low oxygen partial pressure treatment.

Example 13

The same small-scale experiment furnace tube as that in Example 2 was subjected to a low oxygen partial pressure pre-oxidation treatment, except that the dew point of the gas mixture of CO and water vapor was 15°C, the other treatment conditions were the same as those in Example 2; an oxide film containing elements such as Cr, Mn, Ni, Fe, O and Si was formed on the inner wall surface of the furnace tube. The chromium manganese oxide in the oxide film was $Mn_{1.5}Cr_{1.5}O_4$, and the total content of iron and nickel elements was 15.4wt% relative to the total weight of the oxide film.

The hydrocarbon steam cracking reaction was carried out in the small-scale experiment furnace tube after the above treatment with the low oxygen partial pressure atmosphere, the cracking feedstock and the cracking conditions were the same as those in Example 2. The coke amount of the furnace tube in the present disclosure was reduced by 65.88% compared to the coke amount of HP40(Cr25Ni35) furnace tube in the prior art which did not contain the twisted slice and was not subjected to the low oxygen partial pressure treatment.

Example 14

The same small-scale experiment furnace tube as that in Example 2 was subjected to a low oxygen partial pressure pre-oxidation treatment, except that the dew point of the gas mixture of CO and water vapor was 30°C, the other treatment conditions were the same as those in Example 2; an oxide film containing elements such as Cr, Mn, Ni, Fe, O and Si was formed on the inner wall surface of the furnace tube. The chromium manganese oxide in the oxide film was $Mn_{1.5}Cr_{1.5}O_4$, and the total content of iron and nickel elements was 27.94wt% relative to the total weight of the oxide film.

The hydrocarbon steam cracking reaction was carried out in the small-scale experiment furnace tube after the above treatment with the low oxygen partial pressure atmosphere, the cracking feedstock and the cracking conditions were the same as those in Example 2. The coke amount of the furnace tube in the present disclosure was reduced by 30.23% compared to the coke amount of HP40(Cr25Ni35) furnace tube in the prior art which did not contain the twisted slice and was not subjected to the low oxygen partial pressure treatment.

Example 15

The same small-scale experiment furnace tube as that in Example 2 was subjected to a low oxygen partial pressure pre-oxidation treatment, except that the dew point of the gas mixture of CO and water vapor was 40°C, the other treatment conditions were the same as those in Example 2; an oxide film containing elements such as Cr, Mn, Ni, Fe, O and Si was formed on the inner wall surface of the furnace tube. The chromium manganese oxide in the oxide film was $Mn_{1.5}Cr_{1.5}O_4$, and the total content of iron and nickel elements was 37.41wt% relative to the total weight of the oxide film.

The hydrocarbon steam cracking reaction was carried out in the small-scale experiment furnace tube after the above treatment with the low oxygen partial pressure atmosphere, the cracking feedstock and the cracking conditions were the same as those in Example 2. The coke amount of the furnace tube in the present disclosure was reduced by 28.56% compared to the coke amount of HP40(Cr25Ni35) furnace tube in the prior art which did not contain the twisted slice and was not subjected to the low oxygen partial pressure treatment.

Comparative Example 3

The same small-scale experiment furnace tube as that in Example 2 was used, except that the furnace tube did not contain the twisted slice and was not subjected to the low oxygen partial pressure treatment; the hydrocarbon steam cracking reaction was performed in the small-scale experiment furnace tube, the cracking feedstock and cracking conditions were same as those in Example 2. The coke amount of the small-scale experiment furnace tube was 100%.

Example 16

The HP40(Cr25Ni35) small-scale experiment furnace tube was subjected to low oxygen partial pressure pre-oxidation treatment, the elemental composition (wt%) of the furnace tube alloy comprised: 25.1wt% of Cr, 35.2wt% of Ni, 1.0wt% of Mn, 1.5wt% of Si, 0.4wt% of C, less than 0.03wt% of P, less than 0.03wt% of S, and the balance was Fe (wt%).
A gas mixture of $H_2$ and $H_2O$ was used as the treatment gas of a low oxygen partial pressure gas atmosphere, wherein the dew point of the gas mixture was 10°C, the flow rate of the low oxygen partial pressure gas was 400ml/min, the treatment temperature was 950°C, and the treatment time was 30 hours; an oxide film containing elements such as Cr, Mn, Ni, Fe, O and Si was formed on the inner wall surface of the furnace tube. The chromium manganese oxide in the oxide film was $MnCr_2O_4$, the contents of iron element and nickel element in the oxide film were respectively 3.76wt% and 4.58wt%.
The hydrocarbon steam cracking reaction was carried out in the small-scale experiment furnace tube after the above treatment with the low oxygen partial pressure atmosphere. The cracking feedstock was naphtha having the physical properties consisting of distillation range of 32.8-173.8°C and specific gravity $D_{20}$ of 0.7058 g/mL. The cracking conditions were as follows: the cracking temperature was 845°C, and the water-to-oil ratio was 0.5. The coke amount of the furnace tube in the present disclosure was reduced by 91.85% compared to the coke amount of HP40(Cr25Ni35) furnace tube in the prior art which was not subjected to the low oxygen partial pressure treatment.

Example 17

The same small-scale experiment furnace tube as that in Example 16 was subjected to a low oxygen partial pressure pre-oxidation treatment, except that the dew point of the gas mixture of $H_2$ and $H_2O$ was 20°C, the other treatment conditions were the same as those in Example 16; an oxide film containing elements such as Cr, Mn, Ni, Fe, O and Si was formed on the inner wall surface of the furnace tube. The chromium manganese oxide in the oxide film was $MnCr_2O_4$, the contents of iron element and nickel element in the oxide film were respectively 5.23wt% and 4.87wt%.
The hydrocarbon steam cracking reaction was carried out in the small-scale experiment furnace tube after the above treatment with the low oxygen partial pressure atmosphere, the cracking feedstock and the cracking conditions were the same as those in Example 16. The coke amount of the furnace tube in the present disclosure was reduced by 87.65% compared to the coke amount of HP40(Cr25Ni35) furnace tube in the prior art which was not subjected to the low oxygen partial pressure treatment.

Example 18

The same small-scale experiment furnace tube as that in Example 16 was subjected to a low oxygen partial pressure pre-oxidation treatment, except that the dew point of the gas mixture of $H_2$ and $H_2O$ was 0°C, the other treatment conditions were the same as those in Example 16; an oxide film containing elements such as Cr, Mn, Ni, Fe, O and Si was formed on the inner wall surface of the furnace tube. The chromium manganese oxide in the oxide film was $MnCr_2O_4$, the contents of iron element and nickel element in the oxide film were respectively 6.48wt% and 5.69wt%.
The hydrocarbon steam cracking reaction was carried out in the small-scale experiment furnace tube after the above treatment with the low oxygen partial pressure atmosphere, the cracking feedstock and the cracking conditions were the same as those in Example 16. The coke amount of the furnace tube in the present disclosure was reduced by 80.65% compared to the coke amount of HP40(Cr25Ni35) furnace tube in the prior art which was not subjected to the low oxygen partial pressure treatment.

Example 19

The same small-scale experiment furnace tube as that in Example 16 was subjected to a low oxygen partial pressure pre-oxidation treatment, except that the dew point of the gas mixture of $H_2$ and $H_2O$ was 40°C, the other treatment conditions were the same as those in Example 16; an oxide film containing elements such as Cr, Mn, Ni, Fe, O and Si was formed on the inner wall surface of the furnace tube. The chromium manganese oxide in the oxide film was $MnCr_2O_4$, the contents of iron element and nickel element in the oxide film were respectively 11.02wt% and 8.28wt%.

The hydrocarbon steam cracking reaction was carried out in the small-scale experiment furnace tube after the above treatment with the low oxygen partial pressure atmosphere, the cracking feedstock and the cracking conditions were the same as those in Example 16. The coke amount of the furnace tube in the present disclosure was reduced by 51.87% compared to the coke amount of HP40(Cr25Ni35) furnace tube in the prior art which was not subjected to the low oxygen partial pressure treatment.

Example 20

The same small-scale experiment furnace tube as that in Example 16 was subjected to a low oxygen partial pressure pre-oxidation treatment, except that the dew point of the gas mixture of $H_2$ and $H_2O$ was -40°C, the other treatment conditions were the same as those in Example 16; an oxide film containing elements such as Cr, Mn, Ni, Fe, O and Si was formed on the inner wall surface of the furnace tube. The chromium manganese oxide in the oxide film was $MnCr_2O_4$, the contents of iron element and nickel element in the oxide film were respectively 15.89wt% and 13.95wt%.
The hydrocarbon steam cracking reaction was carried out in the small-scale experiment furnace tube after the above treatment with the low oxygen partial pressure atmosphere, the cracking feedstock and the cracking conditions were the same as those in Example 16. The coke amount of the furnace tube in the present disclosure was reduced by 32.58% compared to the coke amount of HP40(Cr25Ni35) furnace tube in the prior art which was not subjected to the low oxygen partial pressure treatment.

Comparative Example 4

The same small-scale experiment furnace tube as that in Example 16 was subjected to a low oxygen partial pressure pre-oxidation treatment, except that the dew point of the gas mixture of $H_2$ and $H_2O$ was 50°C, the other treatment conditions were the same as those in Example 16; an oxide film containing elements such as Cr, Mn, Ni, Fe, O and Si was formed on the inner wall surface of the furnace tube. The chromium manganese oxide in the oxide film was $MnCr_2O_4$, the contents of iron element and nickel element in the oxide film were respectively 20.13wt% and 19.78wt%.
The hydrocarbon steam cracking reaction was carried out in the small-scale experiment furnace tube after the above treatment with the low oxygen partial pressure atmosphere, the cracking feedstock and the cracking conditions were the same as those in Example 16. The coke amount of the furnace tube in the present disclosure was reduced by 19.69% compared to the coke amount of HP40(Cr25Ni35) furnace tube in the prior art which was not subjected to the low oxygen partial pressure treatment.

Comparative Example 5

The same small-scale experiment furnace tube as that in Example 16 was subjected to a low oxygen partial pressure pre-oxidation treatment, except that the dew point of the gas mixture of $H_2$ and $H_2O$ was -50°C, the other treatment conditions were the same as those in Example 16; an oxide film containing elements such as Cr, Mn, Ni, Fe, O and Si was formed on the inner wall surface of the furnace tube. The chromium manganese oxide in the oxide film was $MnCr_2O_4$, the contents of iron element and nickel element in the oxide film were respectively 25.09wt% and 24.95wt%.
The hydrocarbon steam cracking reaction was carried out in the small-scale experiment furnace tube after the above treatment with the low oxygen partial pressure atmosphere, the cracking feedstock and the cracking conditions were the same as those in Example 16. The coke amount of the furnace tube in the present disclosure was reduced by 13.48% compared to the coke amount of HP40(Cr25Ni35) furnace tube in the prior art which was not subjected to the low oxygen partial pressure treatment.

Comparative Example 6

The same small-scale experiment furnace tube as that in Example 16 was used, except that the furnace tube was not subjected to the low oxygen partial pressure pre-oxidation treatment; the hydrocarbon steam cracking reaction was carried out in the small-scale experiment furnace tube, the cracking feedstock and the cracking conditions were the same as those in Example 16. The coke amount in the small-scale experiment furnace tube was 100%.

Example 21

The seamless steel tube made from 15CrMoG tube material was subjected to cold drawing to form the small-scale experiment furnace tube with dimensions of $\varphi14\times2$ (i.e., outer diameter of 14mm and wall thickness of 2mm), the inner surface of the tube after machining process was bright and free of oxide scale, the elemental composition (wt%) of the furnace tube alloy comprised: 1.03wt% of Cr, 0.47wt% of Mo, 0.58wt% of Mn, 0.32wt% of Si, 0.16wt% of C, 2.13wt% of O, 96.87wt% of Fe, and 0.24wt% of other elements.

A gas mixture of $CO_2$ and CO was used as the treatment gas of a low oxygen partial pressure gas atmosphere, wherein the dew point of the gas mixture was 0°C, the flow rate of the low oxygen partial pressure gas was 400ml/min, the treatment temperature was 900°C, and the treatment time was 35 h; an oxide film containing elements such as Cr, Mn, Fe, O and Si was formed on the inner wall surface of the furnace tube. The chromium manganese oxide in the oxide film was $Mn_2CrO_4$, the content of iron element in the oxide film was 25wt%.

The hydrocarbon steam cracking reaction was carried out in the small-scale experiment furnace tube after the above treatment with the low oxygen partial pressure atmosphere. The cracking conditions were as follows: the cracking temperature was 845°C, and the water-to-oil ratio was 0.5. The experimental results demonstrated that the coke amount of the TLE in the present disclosure was reduced by 88% compared to the coke amount of the untreated TLE.

Example 22

The same small-scale experiment furnace tube as that in Example 21 was subjected to a low oxygen partial pressure pre-oxidation treatment, except that the dew point of the gas mixture of $CO_2$ and CO was 10°C, the other treatment conditions were the same as those in Example 21; an oxide film containing elements such as Cr, Mn, Fe, O and Si was formed on the inner wall surface of the furnace tube. The chromium manganese oxide in the oxide film was $Mn_2CrO_4$, the content of iron element in the oxide film was 28wt%.

The hydrocarbon steam cracking reaction was carried out in the small-scale experiment furnace tubes after the above treatment with the low oxygen partial pressure atmosphere, the cracking feedstock and the cracking conditions were the same as those in Example 21. The coke amount of the TLE in the present disclosure was reduced by 82% compared to the untreated TLE.

Example 23

The same small-scale experiment furnace tube as that in Example 21 was subjected to a low oxygen partial pressure pre-oxidation treatment, except that the dew point of the gas mixture of $CO_2$ and CO was -10°C, the other treatment conditions were the same as those in Example 21; an oxide film containing elements such as Cr, Mn, Fe, O and Si was formed on the inner wall surface of the furnace tube. The chromium manganese oxide in the oxide film was $Mn_2CrO_4$, the content of iron element in the oxide film was 32wt%.

The hydrocarbon steam cracking reaction was carried out in the small-scale experiment furnace tube after the above treatment with the low oxygen partial pressure atmosphere, the cracking feedstock and the cracking conditions were the same as those in Example 21. The coke amount of the TLE in the present disclosure was reduced by 78% compared to the untreated TLE.

Example 24

The same small-scale experiment furnace tube as that in Example 21 was subjected to a low oxygen partial pressure pre-oxidation treatment, except that the dew point of the gas mixture of $CO_2$ and CO was 20°C, the other treatment conditions were the same as those in Example 21; an oxide film containing elements such as Cr, Mn, Fe, O and Si was formed on the inner wall surface of the furnace tube. The chromium manganese oxide in the oxide film was $Mn_2CrO_4$, the content of iron element in the oxide film was 35wt%.

The hydrocarbon steam cracking reaction was carried out in the small-scale experiment furnace tube after the above treatment with the low oxygen partial pressure atmosphere, the cracking feedstock and the cracking conditions were the same as those in Example 21. The coke amount of the TLE in the present disclosure was reduced by 51% compared to the untreated TLE.

Example 25

The same small-scale experiment furnace tube as that in Example 21 was subjected to a low oxygen partial pressure pre-oxidation treatment, except that the dew point of the gas mixture of $CO_2$ and CO was -20°C, the other treatment conditions were the same as those in Example 21; an oxide film containing elements such as Cr, Mn, Fe, O and Si was formed on the inner wall surface of the furnace tube. The chromium manganese oxide in the oxide film was $Mn_2CrO_4$, the content of iron element in the oxide film was 38wt%.

The hydrocarbon steam cracking reaction was carried out in the small-scale experiment furnace tube after the above treatment with the low oxygen partial pressure atmosphere, the cracking feedstock and the cracking conditions were the same as those in Example 21. The coke amount of the TLE in the present disclosure was reduced by 40% compared to the untreated TLE.

Example 26

The same small-scale experiment furnace tube as that in Example 21 was subjected to a low oxygen partial pressure pre-oxidation treatment, except that the dew point of the gas mixture of $CO_2$ and CO was 30°C, the other treatment conditions were the same as those in Example 21; an oxide film containing elements such as Cr, Mn, Fe, O and Si was formed on the inner wall surface of the furnace tube. The chromium manganese oxide in the oxide film was $Mn_2CrO_4$, the content of iron element in the oxide film was 51wt%.
The hydrocarbon steam cracking reaction was carried out in the small-scale experiment furnace tube after the above treatment with the low oxygen partial pressure atmosphere, the cracking feedstock and the cracking conditions were the same as those in Example 21. The coke amount of the TLE in the present disclosure was reduced by 21% compared to the untreated TLE.

Example 27

The same small-scale experiment furnace tube as that in Example 21 was subjected to a low oxygen partial pressure pre-oxidation treatment, except that the dew point of the gas mixture of $CO_2$ and CO was -30°C, the other treatment conditions were the same as those in Example 21; an oxide film containing elements such as Cr, Mn, Fe, O and Si was formed on the inner wall surface of the furnace tube. The chromium manganese oxide in the oxide film was $Mn_2CrO_4$, the content of iron element in the oxide film was 57wt%.
The hydrocarbon steam cracking reaction was carried out in the small-scale experiment furnace tube after the above treatment with the low oxygen partial pressure atmosphere, the cracking feedstock and the cracking conditions were the same as those in Example 21. The coke amount of the TLE in the present disclosure was reduced by 15% compared to the untreated TLE.

Comparative Example 7

The same small-scale experiment furnace tube as that in Example 21 was used, except that the furnace tube was not subjected to the low oxygen partial pressure treatment; the hydrocarbon steam cracking reaction was carried out in the small-scale experiment furnace tube, the cracking feedstock and the cracking conditions were the same as those in Example 21. The coke amount in the TLE was 100%.

Example 28

The low oxygen partial pressure atmosphere treatment of the aromatization reactor and light hydrocarbon aromatization reaction evaluation test were performed on the small-scale experiment reactor with dimensions of $\phi 35 \times 9$ made of 304 stainless steel. The inner surface of the reactor after machining process was bright and free of oxide scale, the elemental composition (wt%) of the reactor alloy comprised: 18.05wt% of Cr, 7.71wt% of Ni, 1.43wt% of Mn, 1.34wt% of Si, 1.91wt% of C, 2.78wt% of O, 0.64wt% of Al, and 66.14wt% of Fe.
A gas mixture of $CH_4$ and $H_2O$ was used as the treatment gas of a low oxygen partial pressure gas atmosphere, wherein the dew point of the gas mixture was 3°C, the flow rate of the low oxygen partial pressure gas was 400ml/min, the treatment temperature was 900°C, and the treatment time was 30 h; an oxide film containing elements such as Cr, Mn, Ni, Fe, O and Si was formed on the inner wall surface of the reactor . The chromium manganese oxide in the oxide film was $Mn_{0.5}Cr_{2.5}O_4$, the total content of iron element and nickel element in the oxide film was 14wt%.
The experimental results demonstrated that the coke amount of the aromatization reactor of the present disclosure was reduced by 86% compared to that of the untreated aromatization reactor.

Example 29

The same small-scale experiment reactor as that in Example 28 was subjected to a low oxygen partial pressure pre-oxidation treatment, except that the dew point of the gas mixture of $CH_4$ and $H_2O$ was 5°C, the other treatment conditions were the same as those in Example 28; an oxide film containing elements such as Cr, Mn, Ni, Fe, O and Si was formed on the inner wall surface of the reactor. The chromium manganese oxide in the oxide film was $Mn_{0.5}Cr_{2.5}O_4$, the total content of iron element and nickel element in the oxide film was 18wt%.
The light hydrocarbon aromatization reaction was carried out in the small-scale experiment reactor after the above treatment with the low oxygen partial pressure atmosphere, the reaction feedstock and the reaction conditions were the same as those in Example 28. The coke amount of the aromatization reactor in the present disclosure was reduced by 80% compared to that of the untreated aromatization reactor.

Example 30

The same small-scale experiment reactor as that in Example 28 was subjected to a low oxygen partial pressure pre-oxidation treatment, except that the dew point of the gas mixture of $CH_4$ and $H_2O$ was -5°C, the other treatment conditions were the same as those in Example 28; an oxide film containing elements such as Cr, Mn, Ni, Fe, O and Si was formed on the inner wall surface of the reactor. The chromium manganese oxide in the oxide film was $Mn_{0.5}Cr_{2.5}O_4$, the total content of iron element and nickel element in the oxide film was 21wt%.
The light hydrocarbon aromatization reaction was carried out in the small-scale experiment reactor after the above treatment with the low oxygen partial pressure atmosphere, the reaction feedstock and the reaction conditions were the same as those in Example 28. The coke amount of the aromatization reactor in the present disclosure was reduced by 76% compared to that of the untreated aromatization reactor.

Example 31

The same small-scale experiment reactor as that in Example 28 was subjected to a low oxygen partial pressure pre-oxidation treatment, except that the dew point of the gas mixture of $CH_4$ and $H_2O$ was 15°C, the other treatment conditions were the same as those in Example 28; an oxide film containing elements such as Cr, Mn, Ni, Fe, O and Si was formed on the inner wall surface of the reactor. The chromium manganese oxide in the oxide film was $Mn_{0.5}Cr_{2.5}O_4$, the total content of iron element and nickel element in the oxide film was 24wt%.
The light hydrocarbon aromatization reaction was carried out in the small-scale experiment reactor after the above treatment with the low oxygen partial pressure atmosphere, the reaction feedstock and the reaction conditions were the same as those in Example 28. The coke amount of the aromatization reactor in the present disclosure was reduced by 50% compared to that of the untreated aromatization reactor.

Example 32

The same small-scale experiment reactor as that in Example 28 was subjected to a low oxygen partial pressure pre-oxidation treatment, except that the dew point of the gas mixture of $CH_4$ and $H_2O$ was -15°C, the other treatment conditions were the same as those in Example 28; an oxide film containing elements such as Cr, Mn, Ni, Fe, O and Si was formed on the inner wall surface of the reactor. The chromium manganese oxide in the oxide film was $Mn_{0.5}Cr_{2.5}O_4$, the total content of iron element and nickel element in the oxide film was 28wt%.
The light hydrocarbon aromatization reaction was carried out in the small-scale experiment reactor after the above treatment with the low oxygen partial pressure atmosphere, the reaction feedstock and the reaction conditions were the same as those in Example 28. The coke amount of the aromatization reactor in the present disclosure was reduced by 39% compared to that of the untreated aromatization reactor.

Example 33

The same small-scale experiment reactor as that in Example 28 was subjected to a low oxygen partial pressure pre-oxidation treatment, except that the dew point of the gas mixture of $CH_4$ and $H_2O$ was 25°C, the other treatment conditions were the same as those in Example 28; an oxide film containing elements such as Cr, Mn, Ni, Fe, O and Si was formed on the inner wall surface of the reactor. The chromium manganese oxide in the oxide film was $Mn_{0.5}Cr_{2.5}O_4$, the total content of iron element and nickel element in the oxide film was 37wt%.
The light hydrocarbon aromatization reaction was carried out in the small-scale experiment reactor after the above treatment with the low oxygen partial pressure atmosphere, the reaction feedstock and the reaction conditions were the same as those in Example 28. The coke amount of the aromatization reactor in the present disclosure was reduced by 20% compared to that of the untreated aromatization reactor.

Example 34

The same small-scale experiment reactor as that in Example 28 was subjected to a low oxygen partial pressure pre-oxidation treatment, except that the dew point of the gas mixture of $CH_4$ and $H_2O$ was -25°C, the other treatment conditions were the same as those in Example 28; an oxide film containing elements such as Cr, Mn, Ni, Fe, O and Si was formed on the inner wall surface of the reactor. The chromium manganese oxide in the oxide film was $Mn_{0.5}Cr_{2.5}O_4$, the total content of iron element and nickel element in the oxide film was 45wt%.
The light hydrocarbon aromatization reaction was carried out in the small-scale experiment reactor after the above treatment with the low oxygen partial pressure atmosphere, the reaction feedstock and the reaction conditions were the same as those in Example 28. The coke amount of the aromatization reactor in the present disclosure was reduced by 14% compared to that of the untreated aromatization reactor.

Comparative Example 8

The same small-scale experiment reactor as that in Example 28 was used, except that the small-scale experiment reactor was not subjected to a low oxygen partial pressure treatment; the light hydrocarbon aromatization reaction was performed in the small-scale experiment reactor, the catalyst used, the reaction feedstock and the reaction conditions were the same as those in Example 28. The coke amount in the aromatization reactor was 100%.

Comparative Example 9

The same small-scale furnace tube as that in Example 2 was subjected to low oxygen partial pressure pre-oxidation treatment, except that the volume percentage of the water vapor in the low oxygen partial pressure gas was controlled to be 7.5% (corresponding to a dew point of 41°C), the other treatment conditions were the same as those in Example 2; an oxide film containing elements such as Cr, Mn, Ni, Fe, O and Si was formed on the inner wall surface of the furnace tube. The chromium manganese oxide in the oxide film was $Mn_{1.5}Cr_{1.5}O_4$, the total content of iron element and nickel element in the oxide film was 52.85wt%.
The hydrocarbon steam cracking reaction was carried out in the small-scale experiment furnace tube after the above treatment with the low oxygen partial pressure atmosphere, the cracking feedstock and the cracking conditions were the same as those in Example 2. The coke amount of the furnace tube in the present disclosure was reduced by 12.32% compared to that of HP40(Cr25Ni35) furnace tube in the prior art which did not contain the enhanced heat transfer member and was not subjected to the low oxygen partial pressure treatment.

Comparative Example 10

The same small-scale furnace tube as that in Example 14 was subjected to low oxygen partial pressure pre-oxidation treatment, except that the volume percentage of the water vapor in the low oxygen partial pressure gas was controlled to be 4.2% (corresponding to a dew point of 30°C), the other treatment conditions were the same as those in Example 14; an oxide film containing elements such as Cr, Mn, Ni, Fe, O and Si was formed on the inner wall surface of the furnace tube. The chromium manganese oxide in the oxide film was $Mn_{1.5}Cr_{1.5}O_4$, the total content of iron element and nickel element in the oxide film was 38.08wt%.
The hydrocarbon steam cracking reaction was carried out in the small-scale experiment furnace tube after the above treatment with the low oxygen partial pressure atmosphere, the cracking feedstock and the cracking conditions were the same as those in Example 14. The coke amount of the furnace tube in the present disclosure was reduced by 25.45% compared to that of HP40(Cr25Ni35) furnace tube in the prior art which did not contain the enhanced heat transfer member and was not subjected to the low oxygen partial pressure treatment.

**Claims**

1. A method for preparing an anti-coking apparatus comprising:

   subjecting a low oxygen partial pressure gas and the apparatus to a contact reaction to produce an anti-coking apparatus having an oxide film on the inner surface;
   the dew point of the low oxygen partial pressure gas is from -40°C to 40°C.

2. The method of claim 1, wherein the materials of the apparatus comprise iron element and/or nickel element. Preferably, the oxide film comprises chromium manganese oxide and metallic elements, the metallic elements are iron element and/or nickel element.

3. The method of claim 2, wherein the dew point of the low oxygen partial pressure gas and the content of metallic elements in the oxide film of the anti-coking apparatus satisfy the following relationship:

$$(W1-W2)/W1 = aT^2 + bT + c \text{ Formula I;}$$

in Formula I, $-0.0039 \leq a \leq -0.0001$, $0.001 \leq b \leq 0.0294$, $0.7269 \leq c \leq 0.8577$, $R^2 \geq 0.879$;
wherein W1 denotes the content of metallic elements in the apparatus before the contact reaction, wt%; W2 denotes the content of the metallic elements in the oxide film of the apparatus after the contact reaction, wt%; T is the dew point of the low oxygen partial pressure gas, °C.

4. The method of any one of claims 1-3, wherein the apparatus is at least one selected from the group consisting of an alloy furnace tube, a TLE and a light hydrocarbon aromatization reactor;

preferably, when the apparatus is an alloy furnace tube, the total content of metallic elements in the alloy furnace tube before the contact reaction is 25-90wt%;
preferably, when the apparatus is a TLE, the total content of metallic elements in the tube pass furnace tubes of TLE before the contact reaction is 76.4-98wt%;
preferably, the alloy material of the aromatization reactor is at least one selected from the group consisting of stainless steel 304, 316 and 321, more preferably, the alloy material of the aromatization reactor is stainless steel 304, and the content of metallic elements in the aromatization reactor before the contact reaction is 68-81wt%.

5. The method of claims 3 or 4, wherein $(W1-W2)/W1 \geq 0.281$, preferably, $(W1-W2)/W1 \geq 0.583$.

6. The method of any one of claims 3-5, wherein the dew point of the low oxygen partial pressure gas is within a range of -30°C to 30°C;
in Formula I, $-0.0005 \leq a \leq -0.0003$, $0.001 \leq b \leq 0.0092$, $0.7355 \leq c \leq 0.8308$, $R^2 \geq 0.9539$.

7. The method of any one of claims 3-5, wherein the dew point of the low oxygen partial pressure gas is within a range of -20°C to 20°C;
in Formula I, $-0.0006 \leq a \leq -0.0003$, $0.001 \leq b \leq 0.0092$, $0.7269 \leq c \leq 0.8308$, $R^2 \geq 0.879$.

8. The method of any of claims 3-5, wherein the dew point of the low oxygen partial pressure gas is within a range of -15°C to 15°C;
in Formula I, $-0.0006 \leq a \leq -0.0005$, $0.0021 \leq b \leq 0.0049$, $0.7419 \leq c \leq 0.8109$, $R^2 \geq 0.879$.

9. The method of any one of claims 3-5, wherein the dew point of the low oxygen partial pressure gas is within a range of -15°C to 10°C;
in Formula I, $-0.0005 \leq a \leq -0.0003$, $0.0021 \leq b \leq 0.0053$, $0.7419 \leq c \leq 0.8138$, $R^2 \geq 0.8943$.

10. The method of any one of claims 3-5, wherein the dew point of the low oxygen partial pressure gas is within a range of 0°C to 10°C;
in Formula I, $a=-0.0022$, $b=0.0238$, $c=0.7787$, $R^2=0.9887$.

11. The method of any one of claims 1-10, wherein the low oxygen partial pressure gas is a gas mixture consisting of $CO_2$ and/or $H_2O$ and at least one selected from the group consisting of CO, $CH_4$, $C_2H_6$, $C_3H_8$, $NH_3$, $H_2$, $N_2$, Ar, He, air and pyrolysis gas;

preferably, the low oxygen partial pressure gas is at least one selected from the group consisting of a gas mixture of $CH_4$ and $H_2O$, a gas mixture of $CO_2$ and CO, a gas mixture of $H_2O$ and CO, and a gas mixture of $H_2O$ and $H_2$;
preferably, the method further comprises a step of measuring dew point of the low oxygen partial pressure gas.

12. The method of any one of claims 1-11, wherein the conditions of the contact reaction comprise: reaction temperature of 400-1,100°C, preferably 600-1,100°C; reaction time of 5-100h, preferably 5-72h.

13. The method of any one of claims 1-12, wherein the apparatus is an alloy furnace tube;
preferably, the alloy furnace tube comprises an enhanced heat transfer member fixed in the furnace tube.

14. The method of claim 13, wherein the enhanced heat transfer member is at least one selected from the group consisting of a twisted slice, an inner rib and an inner fin.

15. The method of claim 13 or 14, wherein the tubes with the enhanced heat transfer member have a length of 20-80cm, the number of said tubes is 1-200, and the tubes are distributed over different tube passes of the entire furnace tube.

16. An anti-coking apparatus manufactured with the method of any one of claims 1-15.

17. A use of the anti-coking apparatus of claim 16 in at least one of a cracking furnace, a TLE and an aromatization reactor.

## INTERNATIONAL SEARCH REPORT

| International application No. |
| --- |
| **PCT/CN2021/101435** |

**A.    CLASSIFICATION OF SUBJECT MATTER**

C23C 8/16(2006.01)i

According to International Patent Classification (IPC) or to both national classification and IPC

**B.    FIELDS SEARCHED**

Minimum documentation searched (classification system followed by classification symbols)

C23C; C23F; F23J

Documentation searched other than minimum documentation to the extent that such documents are included in the fields searched

Electronic data base consulted during the international search (name of data base and, where practicable, search terms used)

CNTXT, DWPI, SIPOABS, CNKI: 低氧分压气体, 氧化膜, 结焦, 露点, 炉管, low oxidizing atmosphere, oxid+, layer, coking, coke formation, dew point, furnace tube

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 106591845 A (CHINA PETROLEUM & CHEMICAL CORPORATION et al.) 26 April 2017 (2017-04-26)<br>description paragraphs 12, 14, 18, 19 | 1-17 |
| Y | US 5288345 A (NGK INSULATORS INC.) 22 February 1994 (1994-02-22)<br>claims 1-2, description, column 2, lines 18-26, 40-54, 66-68, column 3, lines 1-5 | 1-17 |
| A | CN 107604274 A (CHINA PETROLEUM & CHEMICAL CORPORATION et al.) 19 January 2018 (2018-01-19)<br>claims 1-13 | 1-17 |
| A | US 6436202 B1 (NOVA CHEM INT. SA.) 20 August 2002 (2002-08-20)<br>description, column 2 line 47 - column 3 line 65 | 1-17 |
| A | US 5630887 A (NOVACOR CHEM LTD.) 20 May 1997 (1997-05-20)<br>description, column 2 line 19 - column 3 line 51 | 1-17 |

☐ Further documents are listed in the continuation of Box C.     ☑ See patent family annex.

| | |
| --- | --- |
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **03 September 2021** | **24 September 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2021/101435** |

| Patent document cited in search report | | | Publication date (day/month/year) | Patent family member(s) | | | Publication date (day/month/year) |
| --- | --- | --- | --- | --- | --- | --- | --- |
| CN | 106591845 | A | 26 April 2017 | CN | 106591845 | B | 26 March 2019 |
| US | 5288345 | A | 22 February 1994 | JP | 2500272 | B2 | 29 May 1996 |
| | | | | EP | 0510950 | A1 | 28 October 1992 |
| | | | | JP | H04329861 | A | 18 November 1992 |
| | | | | DE | 69205881 | T2 | 05 June 1996 |
| | | | | EP | 0510950 | B1 | 08 November 1995 |
| | | | | DE | 69205881 | D1 | 14 December 1995 |
| CN | 107604274 | A | 19 January 2018 | | None | | |
| US | 6436202 | B1 | 20 August 2002 | NO | 334671 | B1 | 12 May 2014 |
| | | | | WO | 0222908 | A2 | 21 March 2002 |
| | | | | MY | 117628 | A | 31 July 2004 |
| | | | | TW | I230744 | B | 11 April 2005 |
| | | | | BR | 0113486 | B1 | 14 June 2011 |
| | | | | GC | 0000303 | A | 01 November 2006 |
| | | | | CA | 2355797 | C | 14 December 2010 |
| | | | | DE | 60141847 | D1 | 27 May 2010 |
| | | | | EP | 1325174 | B1 | 14 April 2010 |
| | | | | BR | 0113486 | A | 15 July 2003 |
| | | | | JP | 2004508466 | A | 18 March 2004 |
| | | | | JP | 4632629 | B2 | 23 February 2011 |
| | | | | CA | 2355797 | A1 | 12 March 2002 |
| | | | | ES | 2342149 | T3 | 02 July 2010 |
| | | | | NO | 20031068 | L | 07 March 2003 |
| | | | | NO | 20031068 | A | 07 March 2003 |
| | | | | AT | 464405 | T | 15 April 2010 |
| | | | | AU | 8740601 | A | 26 March 2002 |
| | | | | WO | 0222908 | A3 | 19 September 2002 |
| | | | | EP | 1325174 | A2 | 09 July 2003 |
| | | | | NO | 20031068 | D0 | 07 March 2003 |
| US | 5630887 | A | 20 May 1997 | CA | 2164020 | C | 07 August 2007 |
| | | | | CA | 2164020 | A1 | 14 August 1996 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010582151
- CN 202010582144
- CN 202010582969X
- CN 202010582183
- US 5630887 A
- US 6436202 B1
- US 6824883 B1
- US 7156979 B2
- US 7488392 B2
- CN 105506713 A
- CN 103374705 A